# FASCICULE DE BREVET EUROPEEN

(11) **EP 0 717 603 B1**
(45) Date de publication et mention de la délivrance du brevet: **19.11.1997**
(21) Numéro de dépôt: 94926272.9
(22) Date de dépôt: 05.09.1994
(51) Int. Cl.: A47J 31/40, B65D 81/00

(54) **CONDITIONNEMENT DE CAFE MOULU DU TYPE PASTILLE PRE-DOSEE ET MACHINE A CAFE EXPRESS UTILISANT UN TEL CONDITIONNEMENT**
PASTILLENFÖRMIGE KAFFEEPULVER-PORTIONSPACKUNG UND ESPRESSOMASCHINE ZUR EXTRAKTION DIESER PORTIONSPACKUNG
PACKAGING OF GROUND COFFEE OF THE PREDOSED PASTILLE TYPE AND ESPRESSO COFFEE MACHINE USING SUCH PACKAGING

(30) Priorité: 06.09.1993 FR 9310760; 16.06.1994 FR 9407509
(43) Date de publication de la demande: 26.06.1996
(73) Titulaire: COMPAGNIE MEDITERRANEENNE DES CAFES S.A., F-06516 Carros Cédex (FR)
(72) Inventeur: BLANC, Jean Pierre, F-06510 Gattières (FR)
(74) Mandataire: Hautier, Jean-Louis
(86) Numéro de dépôt international: FR9401039
(87) Numéro de publication internationale: WO9507041

(56) Documents cités:
- EP-A- 0 041 931
- EP-A- 0 093 366
- CH-A- 495 138
- CH-A- 527 592
- DE-A- 1 579 383
- FR-A- 1 216 342
- FR-A- 1 575 181
- FR-A- 2 211 924
- US-A- 2 952 202

## Description

La présente invention concerne un conditionnement pour du café moulu, se présentant sous la forme de pastille, de dosette ou de sachet pré-dosé. Le conditionnement peut être utilisé dans des machines à café express adaptées à la réception de tel conditionnement de forme spécifique.

Ainsi la pastille, la dosette ou le sachet pré-dosé est formé de filtre papier contenant le café moulu et constituant un rebord de scellement.

L'état de la technique comprend de nombreux documents.

Parmi les plus intéressants, le document EP-A-0.361.569 concerne un filtre à café dans lequel une quantité prédéterminée de café moulu est retenue entre des papiers filtres supérieur et inférieur fixés à un support.

Ce dernier est soit un filtre destiné à recevoir une certaine quantité d'eau, soit une cartouche pour un filtre, et comporte un bord vertical. L'ensemble est caractérisé par le fait que le papier filtre supérieur forme avec le filtre ou la cartouche une cuvette, ce qui signifie que le rebord périphérique du papier filtre supérieur est plié de façon oblique vers le haut.

Le document EP-A-0.422.898 décrit une forme améliorée et optimisée d'un sachet filtre de café à infuser, destiné à s'adapter sur les machines à café et à faire une infusion homogène de café dans les différentes machines à café de type américain ou européen. Le sachet comprend une première pièce en papier filtre dont la surface est étirée et accrue d'au moins 3 %, pour former une poche arrondie, et scellée à une seconde pièce circulaire en papier filtre, pour former un rebord de scellement de pratiquement 1,27 cm autour d'elle. Une quantité dosée de café moulu est enfermée dans la poche arrondie et munie d'un espace à sa partie supérieure pratiquement d'au moins 50 % du volume de la poche. Les première et seconde pièces circulaires de papier filtre ont chacune, de préférence, un diamètre approximatif de 12,7 cm et sont remplies d'une quantité dosée de café moulu pour infuser cinq tasses d'eau. Dans cette forme améliorée, la présence d'un rebord de 1,27 cm, en combinaison avec une surface accrue due à l'étirage du filtre, a pour résultat un café avec une augmentation de l'extraction des solides solubles et une diminution de l'écart standard d'extraction.

Le document WO-92.07775 a trait à une cartouche étanche contenant une dose de substance destinée à la préparation d'une boisson, par dissolution ou extraction par un liquide, qui est placée dans une pièce collectrice de liquide constituée par un godet tronconique. L'ensemble ainsi formé est placé dans un logement d'une "cuillère" de machine à café express. Le sommet de la cartouche est perforé par une pièce perforatrice et injectrice qui injecte un liquide sous pression dans la cartouche. La membrane inférieure de la cartouche se déforme sous l'effet de la pression ainsi engendrée et elle est pressée contre des pointes perforatrices du fond du godet. La boisson s'écoule dans le logement et elle peut ainsi être recueillie dans des tasses. L'invention permet d'optimaliser la durée de contact de la substance contenue dans la cartouche avec le liquide destiné à sa dissolution ou son extraction.

FR-A-1.575.181 : Dispositif d'infusion sacrifiable comprenant des filtres supérieur et inférieur formant une chambre entre eux, une quantité dosée de café moulu disposée dans la chambre, un disque annulaire destiné à être supporté par le bord d'une tasse à café, une paroi s'étendant depuis le disque et suspendant les filtres et le café à une certaine distance au-dessous du disque en position d'infusion et qui peut être repliée dans une position dans laquelle les filtres et la masse de café se trouvent dans l'espace annulaire du disque en vue de l'empaquetage, la paroi et le disque supérieur définissant un réservoir d'eau dans la position d'infusion.

Il s'agit là d'un autre problème puisqu'il y a infusion du café et non d'un café express (extraction-percolateur). Le café est peu tassé. Le disque fait office de patte d'accrochage au bord de la tasse, il comporte une bordure d'accrochage à cet effet. Ce disque est articulé et peut être replié à l'intérieur de l'espace annulaire. Il ne peut être utilisé dans une machine.

CH-495 138 : Ce brevet décrit une dosette de café sans aucune armature ou pièce rigide. Il n'y a aucune tenue mécanique autorisant l'utilisation de ce type de dosette pour faire du café express.

Les inconvénients de ces différents dispositifs de filtres à café proviennent de leur structure. Soit, ils sont constitués d'une carcasse rigide nécessitant d'être percée, le coût d'un tel dispositif est très important. Soit la structure se limite à l'usage de papier filtre moins coûteux mais dont la tenue mécanique est grandement insuffisante.

Certains fabricants ont essayé d'améliorer la tenue mécanique des dispositifs utilisant un conditionnement à base de papier filtre. Pour ce faire, ils ont tassé le café à l'intérieur du conditionnement, de sorte que ledit café est pratiquement solide. Ceci entraîne que la percolation ou lixiviation ne peut se faire qu'avec une pression très importante avec les problèmes d'étanchéité que cela peut engendrer.

A cet effet, la présente invention propose un conditionnement de café moulu sous forme de pastille, de dosette ou de sachet prédosé, formé de papier filtre qui renferme le café moulu, le contenu du café moulu disposé dans la pastille ou autres constituant une partie centrale, est circonscrit partiellement, ou en totalité, au niveau de son pourtour par au moins une pièce, caractérisé par le fait que la pièce est en un matériau suffisamment rigide, qui fait office d'armature, de sorte que ladite pastille ou autres a une tenue mécanique suffisante pour être utilisable dans des machines à café express et que la pièce rigide, qui fait office d'armature, est disposée dans le plan transversal de la partie centrale qui forme le disque contenant le café moulu ou produit à infuser.

Le pourtour de la pastille ou autres est constitué de papier filtre qui forme un rebord de scellement présent sur une partie ou la totalité de la périphérie de ladite pastille ou autres.

La pastille de café ou autres est formée d'une partie centrale en papier filtre contenant le café moulu et d'une partie périphérique ou rebord de scellement dont les formes sont respectivement celles d'un disque et celles d'un anneau.

La pièce rigide faisant office d'armature est formée par deux anneaux placés de part et d'autre du papier filtre formant le rebord de scellement.

Selon un mode de réalisation, les anneaux sont en carton.

L'invention concerne également une machine à café express formée de façon classique d'une chaudière et d'un vérin, lui-même composé d'un corps cylindrique renfermant un piston utilisant des pastilles de café ou autres qui est caractérisée par le fait que l'introduction de la pastille s'effectue dans un plan vertical et l'action du piston se situe dans un plan horizontal et qu'elle est constituée-de butées placées à une extrémité de la chaudière en position perpendiculaire par rapport à l'axe longitudinal de la machine à café express, le vérin coopérant avec ladite chaudière au niveau des butées pour fixer en position une pastille de café ou autres qui est fixée par sa pièce, en matériau rigide, entre les butées d'une part, et la chaudière d'autre part.

Le vérin est constitué d'un corps cylindrique renfermant un piston.

Chaque butée est mobile selon un axe paralléle à l'axe longitudinal de la machine à café express.

La partie supérieure de ladite machine à café express comporte une fente située à la verticale et au-dessus des butées, de sorte que le positionnement de la pièce rigide de chaque pastille ou autres entre les butées d'une part, et la chaudière d'autre part, se fait par simple gravité.

Une ouverture est pratiquée à la verticale et en dessous des butées de sorte que lorsque lesdites butées sont manoeuvrées afin d'être parallèles l'une par rapport à l'autre, la pastille ou autres n'est plus retenue par sa pièce rigide et tombe à l'extérieur de la machine à café express par simple gravité.

Les dessins ci-joints sont donnés à titre d'exemples indicatifs et non limitatifs. Ils représentent un mode de réalisation préféré selon l'invention. Ils permettront de comprendre aisément l'invention.

La figure 1 représente un conditionnement selon l'invention en coupe transversale.

La figure 2 représente une vue en élévation du conditionnement.

La figure 3 représente une vue en perspective d'un mode de réalisation d'une machine à café express qui utilise le conditionnement présenté aux figures précédentes.

La figure 4 représente une vue en coupe longitudinale horizontale de la machine à café express, au niveau de la chambre d'infusion avant le rapprochement du corps cylindrique et de la chaudière.

La figure 5 représente une vue en coupe identique à celle de la figure 4 lors du rapprochement dudit corps cylindrique et de ladite chaudière.

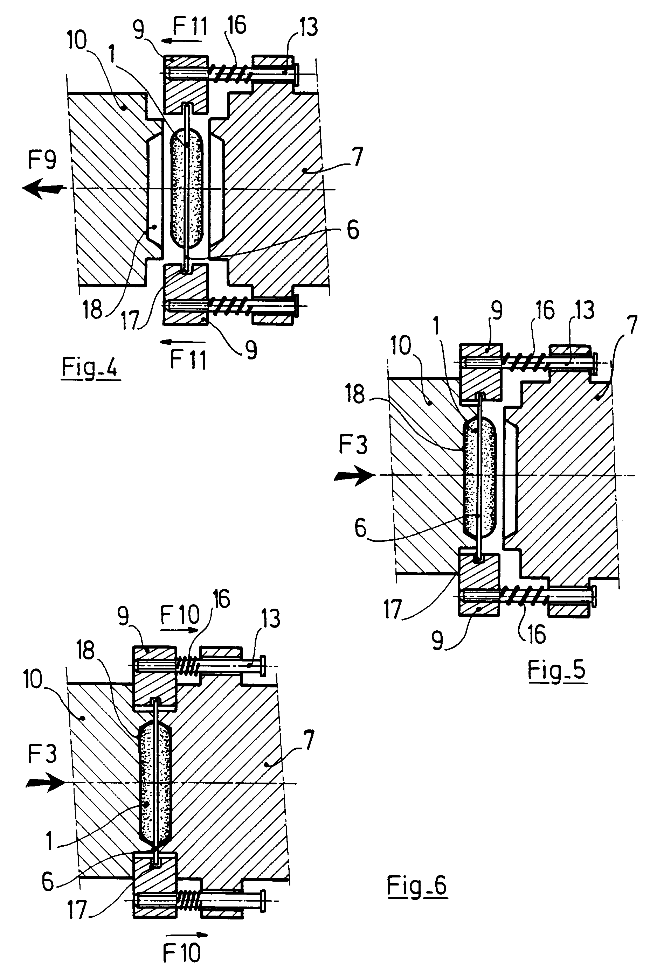

Enfin la figure 6 représente une vue en coupe identique à celles des figures 4 et 5 à la fin du rapprochement du corps et de la chaudière, ce qui forme la chambre d'infusion.

La présente invention propose un café moulu 4 sous forme d'une pastille, d'une dosette ou d'un sachet pré-dosé 1 qui est utilisable par certaines machines telles que des machines à café express 2.

Le conditionnement peut, bien entendu, sans sortir du champ de protection de la présente invention, contenir du café moulu 4 ou tout autre substance pouvant être infusée ou mise en contact avec de l'eau par exemple du thé, de la chicorée, etc.

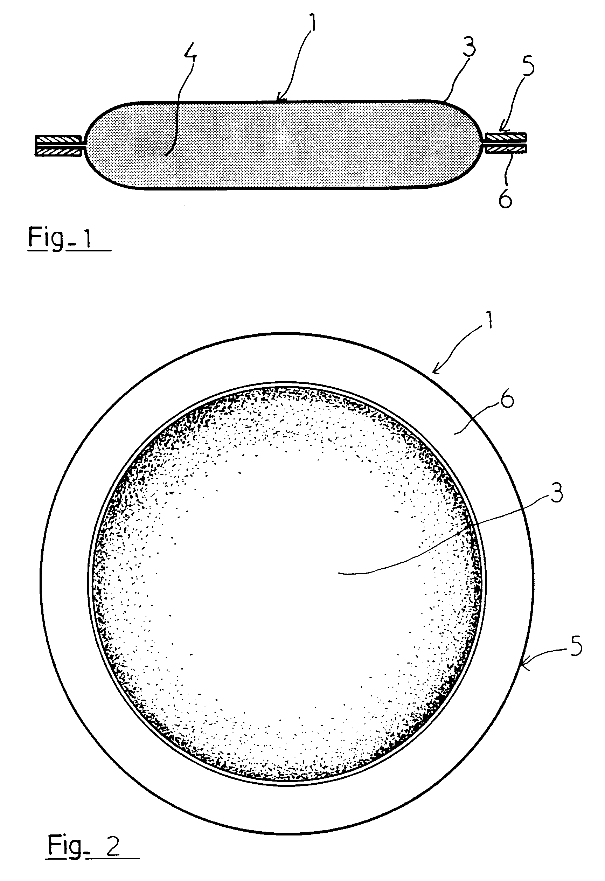

La pastille, la dosette ou le sachet pré-dosé 1 est constitué par du papier filtre 3 qui renferme le café moulu 4 ou tout autre substance tel que cela est représenté dans la figure 1, la pastille ou autres 1 formant un rebord de scellement 5 sur son pourtour qui est caractérisé en ce qu'il est formé partiellement ou en totalité par le papier filtre 3 et par au moins une pièce 6 constituée en un matériau suffisamment rigide pour permettre une bonne tenue mécanique à ladite pastille ou autres 1.

Comme on le voit bien sur la figure 2, la pastille de café 1 est formée d'une partie centrale constituée par le café moulu 4 et le papier filtre 3 qui l'enserre et d'une partie périphérique ou rebord de scellement 5 dont les formes sont respectivement celles d'un disque pour la partie centrale et celles d'un anneau pour la partie périphérique.

Il est bien entendu que toute autre forme ayant les mêmes fonctions et aboutissant au même résultat ne peuvent être considérées que comme des équivalents techniques.

Selon un mode de réalisation préféré, la pièce rigide 6 est formée par deux anneaux placés de part et d'autre de la partie du papier filtre 3 formant le rebord de scellement 5.

De la même façon, les anneaux sont confectionnés dans du carton.

Selon un mode de réalisation préféré, la pièce rigide 6, qui fait office d'armature, est disposée dans le plan transversal de la partie centrale qui forme le disque contenant le café moulu ou produit à infuser.

Ledit anneau ou pièce rigide 6 de renforcement est plan et plat.

Ce matériau est suffisamment rigide et biodégradable pour permettre un bon fonctionnement de la machine à café express et une bonne dégradation une fois que le conditionnement a été utilisé.

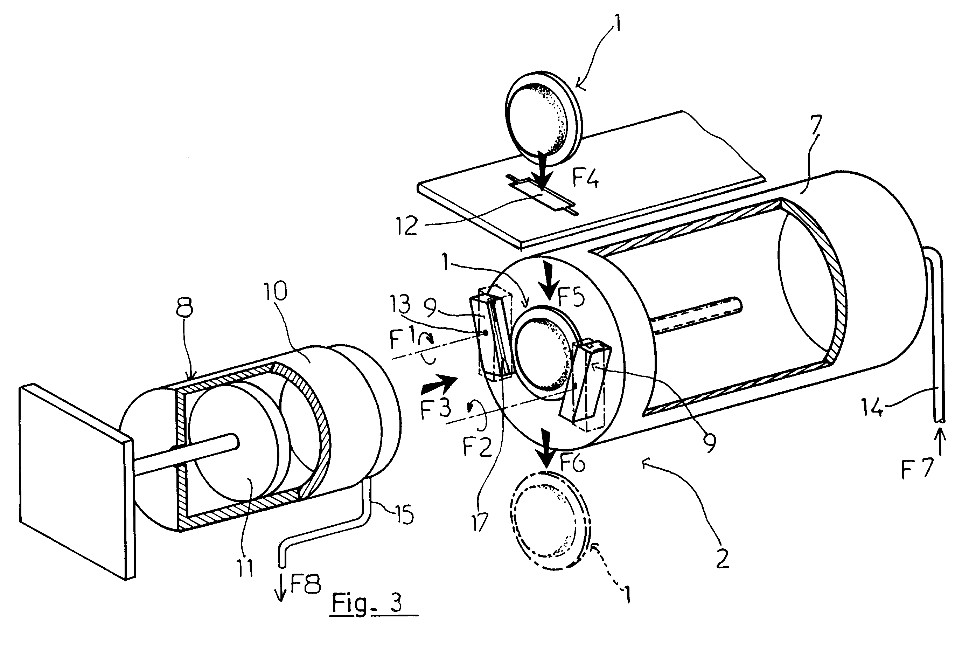

La machine à café express 2 est représentée à la figure 3.

Celle-ci est essentiellement constituée d'une chaudière 7, d'un vérin 8 et de butées 9 placées à une extrémité de la chaudière 7, le vérin 8 coopérant avec ladite chaudière 7 au niveau desdites butées 9 afin de fixer une pastille de café 1.

La pastille 1 est introduite dans la machine 2, selon F4, dans un plan vertical perpendiculairement à l'axe longitudinal de la machine 2. Cette pastille 1 est guidée par des rainures verticales 17 disposées à cet effet au niveau des butées 9.

Le vérin 8 est de forme classique, c'est-à-dire qu'il est constitué d'un corps cylindrique 10 renfermant un piston 11.

Le fonctionnement global de cette machine à café express 2 sera mieux explicité par la suite.

L'introduction de la pastille 1 s'effectue dans un plan vertical et l'action du piston 11 se situe dans un plan horizontal.

Selon la machine à café express 2 présentée à la figure 3, la partie supérieure de ladite machine 2 comporte une fente 12 située au-dessus des butées 9 permettant le positionnement de chaque pastille 1 selon les flèches F4 et F5 à l'intérieur de la machine à café express 2 et ce, par simple gravité.

Une fois que la pastille 1 se trouve maintenue au niveau des butées 9 entre la chaudière 7, d'une part, et le corps cylindrique 10, d'autre part, la pastille 1 se trouve plaquée entre la chaudière 7 et le corps cylindrique 10 dudit vérin 8 suivant le mouvement du corps cylindrique 10 selon la flèche F3. C'est ce qui est bien représenté aux figures 4 à 6.

Bien entendu, la chaudière 7 est préalablement ou en même temps alimentée en eau selon la flèche F7 grâce à une tuyauterie d'entrée 14.

Le corps cylindrique 10 va ensuite être rapproché de la pastille 1 selon F3, de sorte que les butées 9 et la pièce rigide 6 soient en contact avec ledit corps 10, comme on le voit sur la figure 5. Le rapprochement se poursuit, ensuite, comme indiqué à la figure 6, ce qui va permettre la translation des butées 9, selon F10, le long de leurs axes 13 à l'encontre de ressorts 16. L'emplacement desdites butées 9 est délimité par des réservations sur le corps 10 et la chaudière 7. Ledit corps 10 et la chaudière 7 sont quasiment au contact l'un de l'autre, et ne sont séparés que par la pièce rigide 6, de la pastille 1, qui fait alors office d'armature et de joint d'étanchéité.

Le corps 10 comporte un demi logement situé en vis-à-vis d'une demi-logement de la chaudière 7. Lorsque ledit corps 10 et ladite chaudière 7 se rapprochent, les deux demi-logements forment une chambre d'infusion 18, dont l'étanchéité est assurée par la pièce rigide 6.

Lorsque la percolation est terminée, le mouvement inverse est effectué, c'est-à-dire que le corps cylindrique 10 va s'éloigner de la chaudière 7 selon F9 de la figure 4.

De ce fait, les ressorts 16 vont permettre le retour de la pastille 1 par l'intermédiaire des butées 9 à sa position initiale. Ce mouvement des butées 9 s'effectue selon F11.

L'eau de la chaudière 7 est soit déjà chauffée avant de pénétrer dans ladite chaudière 7, soit chauffée directement à l'intérieur de la chaudière 7. Le passage en force d'eau à l'intérieur de la pastille 1 permet d'obtenir un café judicieusement aromatisé. Le café peut ensuite être libéré selon la flèche F8 grâce à une tuyauterie de sortie 15.

Les mouvements du corps cylindrique 10 par rapport au piston 11 sont le fait de l'introduction d'un fluide tel que de l'eau à l'intérieur du corps cylindrique 10 du vérin 8.

Dans le but de simplifier la compréhension des figures, ces mouvements ainsi que les moyens mis en oeuvre pour les engendrer, ne sont pas représentés. Ils sont par ailleurs déjà connus de l'état de la technique.

Chaque butée 9 est mobile selon un axe 13 paralléle à l'axe horizontal de la machine à café express 2, de sorte que les butées 9 peuvent pivoter dans un plan vertical selon les flèches F1 et F2 afin de former un angle plus ou moins fermé permettant de retenir la pastille 1. Ce pivotement s'effectue autour de l'axe 13 de chaque butée, ce qui permet à la pastille 1 soit d'être maintenue au niveau de la chambre d'infusion 18 avant que celle-ci 18 ne soit formée, c'est le cas lorsque les axes longitudinaux des deux butées 9 forment entre elles un angle dont l'ouverture est dirigée vers le haut, soit de tomber à l'extérieur par gravité, voir F6, de la machine à café express 2, lorsque les axes des butées 9 sont parallèles.

Cette sortie s'effectue grâce à une ouverture pratiquée en dessous des butées 9, mais non représentée sur les figures.

Le mouvement des butées 9 selon F1 et F2 est automatisés en fonction de la position du corps cylindrique 10.

Cette automatisation est le fait d'un ensemble de pièces mécaniques, telles que cames, biellettes, non représentées sur les figures, mais dont l'utilisation est déjà bien connue de l'état de la technique.

### REFERENCES

1. Pastille, dosette ou sachet pré-dosé de café
2. Machine à café express
3. Papier filtre
4. Café moulu
5. Rebord de scellement
6. Pièce rigide de renforcement faisant office d'armature et de joint d'étanchéité
7. Chaudière
8. Vérin
9. Butées
10. Corps cylindrique du vérin 8
11. Piston du vérin 8
12. Fente supérieure de la machine à café express 2
13. Axe de rotation et de translation de chaque butée 9
14. Tuyauterie d'entrée d'eau
15. Tuyauterie de sortie de café
16. Ressort de chaque axe 13
17. Rainure de chaque butée 9
18. Chambre d'infusion
F1 et F2. Mouvement de rotation des butées 9 par rapport à la chaudière 7
F3 et F9. Mouvement de translation du corps 10 du vérin 8
F4, F5 et F6. Déplacement de la pastille ou autres 1 par gravité
F7 et F8. Sens de déplacement de l'eau et de la solution de café
F9. Sens de déplacement inverse de F3 dû au vérin 8 ou éloignement du corps 10 de la chaudière 8
F10. Enfoncement des butées 9 à l'encontre des ressorts 16 dû au déplacement F3
F11. Libération des butées 9 poussées par les ressorts 16 dû au déplacement F9

## Revendications

1. Conditionnement de café moulu sous forme de pastille, de dosette ou de sachet pré-dosé (1), formé de papier filtre (3) qui renferme le café moulu (4), le contenu du café moulu (4) disposé dans la pastille ou autres, constituant une partie centrale, est circonscrit partiellement, ou en totalité, au niveau de son pourtour par au moins une pièce (6), caractérisé par le fait
que la pièce (6) est en un matériau suffisamment rigide, faisant office d'armature, de sorte que ladite pastille ou autres (1) a une tenue mécanique suffisante pour être utilisable dans des machines à café express (2), et
que la pièce rigide (6), qui fait office d'armature, est disposée dans le plan transversal de la partie centrale qui forme le disque contenant le café moulu ou produit à infuser.

2. Conditionnement selon la revendication 1 caractérisé par le fait
que le pourtour de la pastille ou autres (1) est constitué de papier filtre (3) qui forme un rebord de scellement (5) présent sur une partie ou la totalité de la périphérie de ladite pastille ou autres (1).

3. Conditionnement selon l'une quelconque des revendications 1 ou 2, caractérisé par le fait
que la pastille de café ou autres (1) est formée d'une partie centrale en papier filtre contenant le café moulu (4) et d'une partie périphérique ou rebord de scellement (5) dont les formes sont respectivement celles d'un disque et celles d'un anneau.

4. Conditionnement selon l'une quelconque des revendications 1, 2 ou 3, caractérisé par le fait
que la pièce rigide (6) faisant office d'armature est formée par deux anneaux placés de part et d'autre du papier filtre (3) formant le rebord de scellement (5).

5. Conditionnement selon l'une quelconque des revendications 3 ou 4, caractérisé par le fait
que les anneaux sont en carton.

6. Conditionnement selon l'une quelconque des revendications 1 ou 3 caractérisé par le fait
que ledit anneau ou pièce rigide (6) de renforcement est plan et plat.

7. Machine à café express (2), formée de façon classique d'une chaudière (7) et d'un vérin (8), lui-même composé d'un corps cylindrique (10) renfermant un piston (11) utilisant des pastilles de café ou autres (1) selon l'une quelconque des revendications 1, 2, 3, 4, 5 ou 6, caractérisée par le fait
que l'introduction de la pastille (1) s'effectue dans un plan vertical et l'action du piston (11) se situe dans un plan horizontal, et
qu'elle est constituée de butées (9) placées à une extrémité de la chaudière (7) en position perpendiculaire par rapport à l'axe longitudinal de la machine à café express (2), le vérin (8) coopérant avec ladite chaudière (7) au niveau des butées (9) pour fixer en position une pastille de café ou autres (1) qui est fixée par sa pièce (6) entre les butées (9), d'une part et la chaudière (7), d'autre part.

8. Machine à café express selon la revendication 7, caractérisée par le fait
que chaque butée (9) est mobile selon un axe (13) parallèle à l'axe longitudinal de la machine à café express (2).

9. Machine à café express selon l'une quelconque des revendications 7 ou 8, caractérisée par le fait
que la partie supérieure de ladite machine à café express (2) comporte une fente (12) située à la verticale et au-dessus des butées (9) de sorte que le positionnement de la pièce rigide (6) de chaque pastille ou autres (1) entre les butées (9) d'une part et la chaudière (7) d'autre part, se fait par simple gravité et,
qu'une ouverture est pratiquée à la verticale et en dessous des butées (9) de sorte que lorsque lesdites butées (9) sont manoeuvrées afin d'être parallèles l'une par rapport à l'autre, la pastille ou autres (1) n'est plus retenue par sa pièce rigide (6) et tombe à l'extérieur de la machine à café express (2) par simple gravité.

## Claims

1. A packaging for ground coffee in the form of a capsule or small dose or pre-dosed bag (1), formed of filter paper (3) which encloses the ground coffee (4), the ground coffee content (4) being arranged in the capsule or other system comprising a central part, and partly or total enclosed on the outer edge by at least one part (6), wherein
the part (6) is in a sufficiently rigid material for the said capsule or other system (1) to have sufficient mechanical strength to be used in expresso coffee machines (2) and
the rigid part (6), which acts as reinforcement, is arranged in the transversal plane of the central part which forms the disk containing the ground coffee or product to be infused.

2. The packaging according to claim 1, wherein
the peripheral part of the capsule or other system (1) consists of filter paper (3) which forms a sealing edge (5) which is present on part or all the periphery of the said capsule or other system (1).

3. The packaging according to any one of claims 1 or 2, wherein
the coffee capsule or other system (1) consists of a central part in filter paper containing the ground coffee (4) and a peripheral part or sealing edge (5), the shapes of which are respectively those of a disk and a ring.

4. The packaging as per any one of claims 1, 2 or 3, wherein
the rigid part (6) used for strengthening consists of two rings placed on either side of the filter paper (3) forming the sealing edge (5).

5. The packaging according to any one of claims 3 or 4, wherein
the rings are made of cardboard.

6. The packaging according to any one of the claims 1 or 3, wherein
the said ring or rigid part (6) of the reinforcement is plane and flat.

7. An expresso coffee machine (2) conventionally consisting of a boiler (7) and pressurizing cylinder (8) itself consisting of a cylindrical casing (10) enclosing a piston (11) and using coffee capsules or other systems (1) according to any one of the claims 1, 2, 3, 4, 5 or 6, wherein
the capsule (1) is introduced in the vertical plane and the piston (11) is situated in a horizontal plane and
that it comprises stops (9) positioned at one end of the boiler (7) perpendicular to the longitudinal axis of the expresso coffee machine (2), the cylinder (8) acting with the said boiler (7) at the stops (9) to secure in position a coffee capsule or other system (1) which is held by its part (6) between the stops (9) on the one hand and boiler (7) on the other.

8. The expresso coffee machine according to claim 7, wherein
each stop (9) is mobile on an axis (13) parallel to the longitudinal axis of the expresso coffee machine (2).

9. The expresso coffee machine according to any one of claims 7 or 8, wherein
the upper part of the said expresso coffee machine (2) has a slot (12) situated directly above the stops (9) so that the positioning of the rigidifying part (6) of each capsule or other system (1) between the stops (9) on the one part and the boiler (7) on the other takes place by gravitational force and,
an opening is made directly below the stops (9) so that the said stops are activated so as to be parallel one to the other, the capsule or other system (1), being no longer held by its rigid part (6) falls by gravitational force outside the expresso coffee machine (2).

## Patentansprüche

1. Verpackung für gemahlenen Kaffee in Form einer Pastille, Dosette oder einem vordosierten Beutel (1), bestehend aus Filterpapier (3), welches den gemahlenen Kaffee (4) umschließt, wobei der in die Pastille oder ein anderes Mittel gefüllte Inhalt an gemahlenem Kaffee die mittlere Partie einnimmt, die an ihrem Umfang teilweise oder vollständig von mindestens einem Teil (6) umrandet ist, dadurch gekennzeichnet,
daß das Teil (6) aus einem genügend starren Material besteht, um als Verstärkung zu dienen, auf eine Weise, daß die besagte Pastille oder das andere Mittel (1) eine ausreichende Festigkeit hat, um in Expresso-Kaffeemaschinen (2) benutzt zu werden,
und das starre Teil (6), das als Verstärkung dient, in transversaler Ebene der mittleren Partie angeordnet ist, die eine Scheibe bildet, welche den gemahlenen Kaffee oder ein anderes aufzubrühendes Produkt enthält.

2. Verpackung gemäß Anspruch 1, dadurch gekennzeichnet, daß der Umfang der Pastille oder des anderen Mittels (1) aus Filterpapier (3) besteht, welches über einen Teil oder die Gesamtheit der Peripherie der besagten Pastille oder dem anderen Mittel (1) eine Versiegelungskante (5) bildet.

3. Verpackung gemäß irgendeinem der Ansprüche 1 oder 2, dadurch gekennzeichnet,
daß die Kaffee-Pastille oder das andere Mittel (1) aus einer zentralen Partie aus Filterpapier gebildet wird, welche den gemahlenen Kaffee (4) enthält, und einem äußeren Teil bzw. Versiegelungsrand (5), deren Formen jeweils die einer Scheibe und die eines Ringes sind.

4. Verpackung gemäß irgendeinem der Ansprüche 1, 2 oder 3, dadurch gekennzeichnet,
daß das starre Teil (6), welches als Verstärkung dient, aus zwei beidseitig des Filterpapiers (3) angebrachten Ringen besteht, die den Versiegelungsrand (5) bilden.

5. Verpackung gemäß irgendeinem der Ansprüche 3 oder 4, dadurch gekennzeichnet,
daß die Ringe aus Karton sind.

6. Verpackung gemäß irgendeinem der Ansprüche 1 oder 3, dadurch gekennzeichnet,
daß der besagte Ring bzw. das starre Verstärkungsteil (6) eben und flach ist.

7. Expresso-Kaffeemaschine (2), auf klassische Weise aus einem Heizkessel (7) und einem Zylinder (8) gebildet, der aus einem zylindrischen Gehäuse (10) besteht und einen Kolben (11) einschließt; in welcher Maschine Kaffee-Pastillen oder andere Mittel (1) benutzt werden, gemäß irgendeinem der Ansprüche 1, 2, 3, 4, 5 oder 6, dadurch gekennzeichnet, daß die Einführung der Pastille (1) in einer vertikalen Ebene erfolgt und die Aktion des Kolbens in einer horizontalen Ebene stattfindet, und daß sie Anschläge (9) an einem Ende des Heizkessels (7) aufweist, in perpendikulärer Position in Bezug auf die Längsachse der Expresso-Kaffeemaschine (2), der Zylinder (8) mit dem besagten Heizkessel (7) in Höhe der Anschläge (9) zusammenwirkt, um eine Kaffee-Pastille oder anderes Mittel (1) in Position zu halten, die einerseits durch sein Teil (6) zwischen den Anschlägen (9) und andererseits durch den Heizkessel (7) gefestigt ist.

8. Expresso-Kaffeemaschine gemäß Anspruch 7, dadurch gekennzeichnet, daß jeder Anschlag (9) gemäß einer Achse (13), parallel mit der Längsachse der Expresso-Kaffeemaschine (2), beweglich ist.

9. Expresso-Kaffeemaschine gemäß irgendeinem der Ansprüche 7 oder 8, dadurch gekennzeichnet, daß der obere Teil der Expresso-Kaffeemaschine (2) einen Schlitz (12) aufweist, der sich in der Vertikalen und über den Anschlägen (9) befindet, so daß die Positionierung des starren Teils (6) jeder Pastille oder anderem Mittel (1) zwischen den Anschlägen (9) einerseits und dem Heizkessel (7) andererseits durch einfache Schwerkraft erfolgt, und daß in der Vertikalen und unter den Anschlägen (9) eine Öffnung angebracht ist, so daß bei Betätigung der besagten Anschläge (9), um sie parallel miteinander zu stellen, die Pastille oder andere Mittel (1) nicht mehr an ihrem starren Teil (6) gehalten wird und durch einfache Schwerkraft aus der Expresso-Kaffeemaschine (2) fällt.
